# EUROPEAN PATENT SPECIFICATION

(11) **EP 0 598 541 B1**
(45) Date of publication and mention of the grant of the patent: **28.07.1999**
(21) Application number: 93308943.5
(22) Date of filing: 09.11.1993
(51) Int. Cl.: G06F 9/44, G06F 3/06, G06F 13/12

(54) **Programmable external storage control apparatus**
Programmierbare Externspeichersteuerungseinrichtung
Dispositif de commande programmable pour mémoire externe

(30) Priority: 18.11.1992 JP 30835392
(43) Date of publication of application: 25.05.1994
(73) Proprietor: International Business Machines Corporation, Armonk, N.Y. 10504 (US)
(72) Inventor: Numata, Tsutomu, Sagamihara-shi, Kanagawa-ken (JP); Kigami, Yuji, Yamato-shi, Kanagawa-ken 242 (JP); Sakai, Tatsuya, Sagamihara-shi, Kanagawa-ken (JP); Shimizu, Kenji, Yamato-shi, Kanagawa-ken (JP)
(74) Representative: Moss, Robert Douglas

(56) References cited:
- EP-A- 0 374 114
- EP-A- 0 498 454
- DE-A- 4 127 518
- US-A- 4 327 408

## Description

### Field of the Invention

The present invention relates to a programmable external storage control apparatus, and more particularly to an external storage control apparatus having a program for controlling operational sequences of reading and writing of an external storage such as a disk drive.

A computer system is generally provided with an external storage for storing a large volume of data, which is typically a direct access storage device (DASD). When data are transferred between a host and the external storage in such a computer system, a buffer for speed adjustment is conventionally interposed therebetween, since the host and external storage have different data transfer rates. For example, in a personal computer system, data transfer between a hard disk drive (HDD) used as a DASD and a host is performed through a buffer (usually called sector buffer) having the capacity of about 32K to 256K bytes. The sector buffer is physically provided on the side of the HDD and a hard disk controller (HDC) reads and writes the sector buffer under the control of a microprocessor.

In the past, a sector buffer stored only data to be transferred between a host and a disk, but a technique has been developed to access the sector buffer by a microprocessor controlling the entire HDD when the host-disk data transfer is not performed. For example, Japanese Published Unexamined Patent Application 2-51724 teaches that a path for connecting data and address buses from a microprocessor to a data buffer RAM is provided in a file data processor of a disk controller, in which the data buffer RAM is used not only as a data buffer at the time of disk access, but also for intelligent command processing for SCSI (small computer system interface) for storing error handling programs therefor, and as a work area of the microprocessor. The microprocessor may access the data buffer RAM when a disk is not read or written. A program that allows the file data processor to read or write is stored in a read only memory (ROM) of the microprocessor.

It is also known that a host, one or more peripheral devices including a disk drive, and a microprocessor access a shared memory according to a predetermined priority. For example, U.S. Patent 4,987,530 discloses a data processing system in which a single input/output controller including a microprocessor and a buffer memory controls a plurality of input/output devices through the respective input/output device controllers so that data transfer is performed between the input/output devices and a main memory of a host CPU (central processing unit) through a local memory bus. The buffer memory stores not only data to be transferred through the local memory bus, but also microprocessor programs. An arbiter included in a buffer control gate array decides which device may access the buffer memory. Also European Patent Application EP-A 374114 (Japanese Published Unexamined Patent Application 2-158824) discloses a similar storage controller using a shared memory. The shared memory is partitioned into a microprocessor data storage area, a disk data storage area, and a host data storage area each of which is selectively accessed according to a predetermined priority.

Operational sequences for data transfer through such a buffer were conventionally controlled by logic of a controller such as HDC or a microprocessor program. The former method using the hardware logic has a disadvantage of less extendibility and flexibility since the hardware is designed to fit an external storage to be controlled and, therefore, it should be redesigned if the external storage is changed. In case of the program control, the program may be merely rewritten when the external storage is changed, but a microprocessor can not do any other job during the data transfer which requires microprocessor intervention all the time. Accordingly, a data transfer control system having the advantages of both prior systems is desired.

It is an object of the present invention to provide a programmable external storage control apparatus in which the microprocessor intervention may be minimum and which has more extendibility and flexibility.

Another object of the present invention is to provide a programmable external storage control apparatus in which a data transfer control program is stored in a buffer for data transfer, and read out and executed by a hardware sequencer independent of the microprocessor.

A further object of the present invention is to provide an external storage system including such an external storage control apparatus.

To accomplish the above objects, the programmable external storage control apparatus according to the present invention comprises a buffer temporarily storing data to be transferred between a host and an external storage and further storing a program for controlling data transfer between the host and the external storage; control means for controlling the data transfer between the host and the external storage by reading from the buffer and executing the data transfer control program; and a microprocessor starting said control means in reading the data transfer control program in response to a command from the host.

The microprocessor includes a memory storing the above-mentioned data transfer control program in addition to other programs to be executed by the microprocessor, and loads the data transfer control program from the memory into the buffer at the time of initialization. This allows the microprocessor to do other jobs such as servo control while the control means is executing the data transfer control program.

### Advantages of the Present Invention

According to the present invention, in a microprocessor controlled external storage control apparatus, data transfer between an external storage apparatus such as a hard disk and a host may be performed independently of a microprocessor and it is possible to cope with various external storage apparatuses by merely rewriting programs to be loaded into a sector buffer.

### Brief Description of the Drawings

FIG. 1 is a block diagram showing an example of a computer system implementing the present invention.

FIG. 2 is a block diagram showing the configuration of an external storage control apparatus according to the present invention.

FIG. 3 is a block diagram showing an illustrative configuration of a host interface circuit in the external storage control apparatus of FIG. 2.

FIG. 4 is a block diagram showing an illustrative configuration of a memory control circuit in the external storage control apparatus of FIG. 2.

FIG. 5 is a block diagram showing an illustrative configuration of a disk interface circuit in the external storage control apparatus of FIG. 2.

FIG. 6 is a block diagram showing an illustrative configuration of a sequencer in the external storage control apparatus of FIG. 2.

FIG. 7 shows examples of time sharing access modes for a sector buffer.

FIG. 8 is a flow chart showing a first half of a read control program.

FIG. 9 is a flow chart showing a second half of the read control program.

### Detailed Description

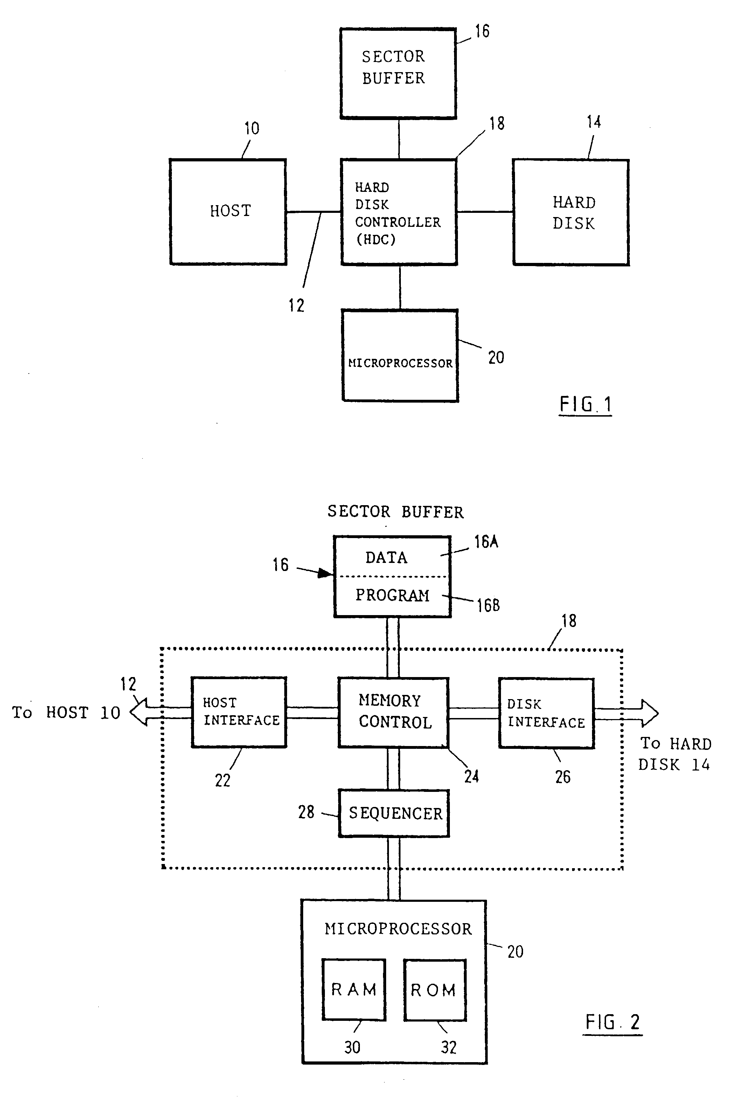

FIG. 1 shows a schematic configuration of a computer system including an external storage control apparatus according to the present invention. In the present embodiment, the external storage is assumed to be a hard disk drive, but the present invention may be applied to any external storage which performs data transfer with a host through a buffer.

The computer system of FIG. 1 may be, for example, a personal computer system and includes a host 10 and an external storage system connected to the host 10 through a host bus 12. Though not shown in the figure, peripheral devices such as a display and a keyboard are connected to the host 10. The external storage system comprises a hard disk apparatus 14 to be read or written in response to a command from the host 10, a sector buffer 16 temporarily storing data to be written into the hard disk apparatus 14 from the host 10 or data to be read from the hard disk apparatus 14 to the host 10, a hard disk controller (HDC) 18 performing data transfer through the sector buffer 16, and a microprocessor 20 controlling the entire external storage system, wherein the sector buffer 16, the HDC 18, and the microprocessor 20 form the external storage control apparatus according to the present invention. In the following, the external storage control apparatus of the present invention will be described by taking as an example a personal computer system in which the host bus 12 is a known AT bus, a sector includes 512 bytes of data and a word consists of two bytes although the present invention may also be practiced in other computer systems.

FIG. 2 shows the above-mentioned external storage control apparatus in more detail. In FIG. 2, the sector buffer 16 is partitioned into a data storage area 16A and a program storage area 16B which is provided according to the present invention. The sector buffer 16, which is accessed word by word, has a capacity of 64K words (128K bytes) and the storage areas 16A and 16B each contain 32K words (64K bytes). Accordingly, a start word address of the program storage area 16B is X'8000'. X denotes hexadecimal notation. Of course, these values are for illustration purpose only and the present invention is not limited thereto. The microprocessor 20 includes a random access memory (RAM) 30 and a read only memory (ROM) 32 which stores a program for controlling data transfer through the sector buffer 16 in addition to other programs for controlling the entire external storage system. Considering program changes, the ROM 32 should be replaceable.

The data transfer control program is loaded from the ROM 32 into the program storage area 16B at the time of initialization such as power on reset (this may be referred to as initial program load). Since the start address of the program storage area 16B is previously known (X'8000' in the above example), the microprocessor 20 writes the data transfer control program by sending to the sector buffer 16 addresses sequentially incremented one by one from the start address. The data transfer control program includes a read control program which controls reading from the hard disk apparatus 14 to the host 10 and a write control program which controls writing from the host 10 to the hard disk apparatus 14. In this embodiment, it is assumed that the read control program is first sequentially written beginning from the start address of the program storage area 16B and then the write control program is sequentially written beginning from, for example, address X'9000' although the order of such writing into the program storage area 16B of the sector buffer 16 may be reversed.

In FIG. 2, the HDC 18 surrounded by dotted lines comprises a host interface circuit 22 connected to the host bus 12, a memory control circuit 24 for controlling access to the sector buffer 16, a disk interface circuit 26 connected to the hard disk apparatus 14, and a sequencer 28 for controlling operational sequences of the HDC 18. The host interface circuit 22 and the disk interface circuit 26 may be those used in the conventional HDC. The host interface circuit 22 exchanges data and commands with the host 10 through the host bus 12 and includes plural registers and an interrupt control circuit. The memory control circuit 24 is connected to the host interface circuit 22, the disk interface circuit 26, and the sequencer 28 and controls data transfer between the sector buffer 16 and these circuits. The disk interface circuit 26 includes a well known circuit for performing conversions and checking required between the hard disk apparatus 14 and the HDC 18. The sequencer 28 reads a program and required parameters stored in the program storage area 16B of the sector buffer 16 to control the data transfer through the sector buffer 16 independently of the microprocessor 20 when the hard disk apparatus 14 is read or written.

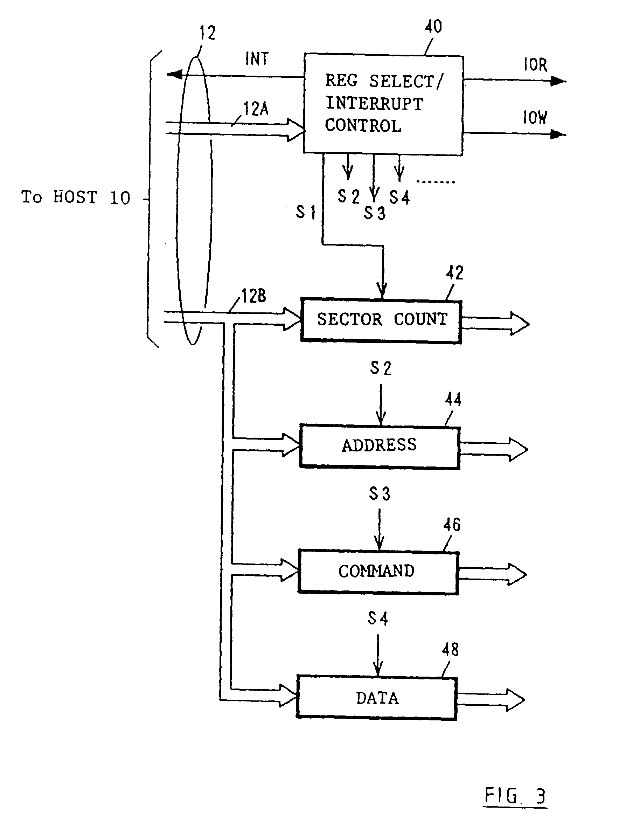

In addition to the above circuits 22, 24, 26 and 28, the HDC 18 actually includes well-known circuits which control a voice coil motor (VCM) for moving a head of the hard disk apparatus 14 and a spindle motor for rotating a disk, respectively, but such circuits are not shown in FIG. 2 since they do not relate to the present invention. Also, though not shown in FIG. 2 to prevent the figure from becoming complex, the microprocessor 20 is connected not only to the sequencer 28 but also to all other circuits. Now, with reference to FIG. 3 to FIG. 6, the host interface circuit 22, the memory control circuit 24, the disk interface circuit 26, and the sequencer 28 are described, respectively.

The host interface circuit 22 shown in FIG. 3 may be a conventional one as described above and includes plural registers selected by a register select and interrupt control circuit 40, that is, a sector count register 42, an address register 44, a command register 46, and a data register 48. The sector count register 42 retains the number of sectors to be read or written, the address register 44 retains a start address thereof (relative block address RBA comprising a cylinder number, a head number, and a sector number), the command register 46 retains a command code, and the data register 48 retains data to be written from the host 10 to the hard disk apparatus 14, or data to be read from the hard disk apparatus 14 to the host 10. These registers are selected by information provided to the register select and interrupt control circuit 40 from the host 10 through the bus 12. At that time, the circuit 40 generates a signal Si (i=1, 2, 3, 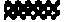 ) for selecting a certain register. Further, the circuit 40 passes an input/output read signal IOR or input/output write signal IOW from the host 10 to the sequencer 28 when the host 10 reads or writes the data register 48 of a single word width, counts the number of times of reading or writing of the data register 48, and generates and sends to the host 10 an interrupt signal INT when that count reaches 256 words (512 bytes or one sector). The host 10 transfers a next sector data and reads status of the HDC 18 in response to the interrupt signal INT. Japanese Patent Application 3-337995 discloses an example of such a host interface circuit.

Although FIG. 3 shows only four registers required for understanding of the present invention, more registers including a status register are actually provided as described in the AT Attachment which is a proposed standard of the AT interface.

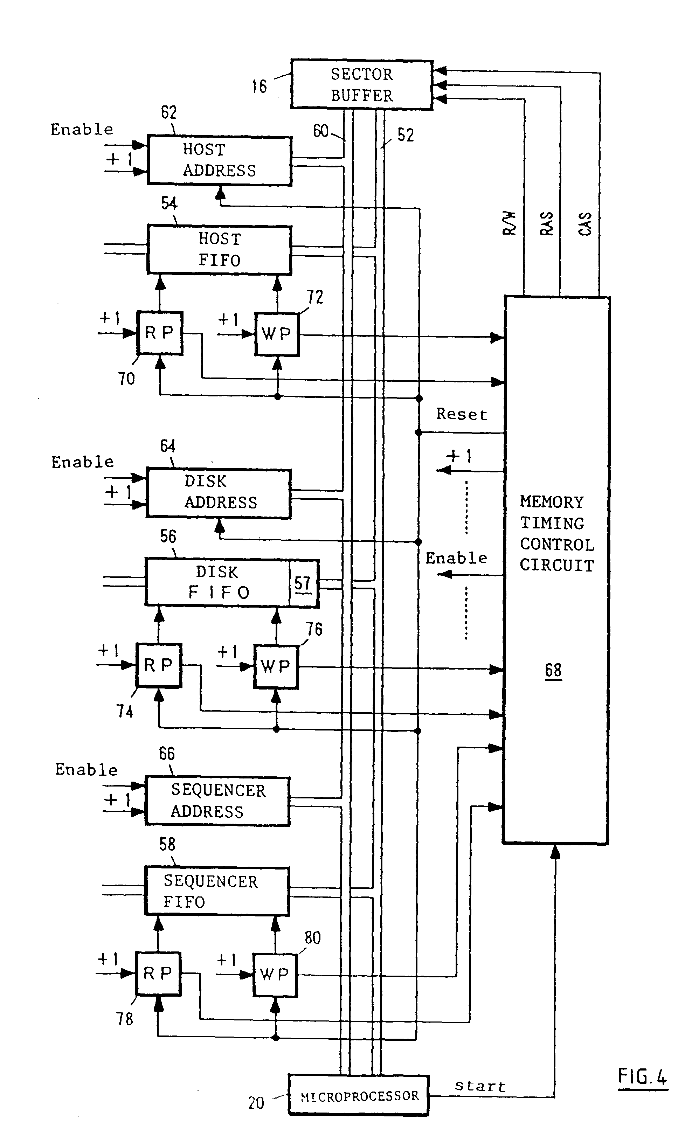

The memory control circuit 24 of FIG. 4 includes three first-in first-out buffers (FIFO) 54, 56 and 58 connected to a one word data bus 52 of the sector buffer 16, three address counters 62, 64 and 66 connected to a one word address bus 60 of the sector buffer 16, and a memory timing control circuit 68 started by the microprocessor 20. The host FIFO 54 is connected between the host interface circuit 22 and the sector buffer 16, the disk FIFO 56 is connected between the disk interface circuit 26 and the sector buffer 16, and the sequencer FIFO 58 is connected between the sequencer 28 and the sector buffer 16. These three FIFO's 54, 56 and 58 are buffers for compensating for speed differences and, therefore, are desired to have capacities depending on data transfer rates of the host 10, the hard disk apparatus 14, and the sequencer 28, respectively. Generally, the host 10 has the fastest data transfer rate, followed by the sequencer 28, and the hard disk apparatus 14 is the slowest. In the present embodiment, the host FIFO 54, the sequencer FIFO 58, and the disk FIFO 56 have capacities of 8 words, 6 words, and 8 bytes, respectively. Of course, these capacity values are used for illustration purpose only, and the present invention is not limited thereto.

Among the three FIFO's, the host FIFO 54 and the sequencer FIFO 58 are accessed on a word basis while the disk FIFO 56 is accessed essentially on a byte basis since the width of a bus between the disk FIFO 56 and the disk interface circuit 26 is one byte. However, since the transfer between the sector buffer 16 and the disk FIFO 56 is performed on a word basis, the disk FIFO 56 is provided with a byte/word converter 57 at a connecting port for the data bus 52. The converter 57 divides each word from the sector buffer 16 into two bytes at the time of writing to the disk FIFO 56 from the sector buffer 16 and, on the other hand, assembles a word from consecutive two bytes and outputs the word to the data bus 52 at the time of writing to the sector buffer 16 from the disk FIFO 56. The data bus 52 and the address bus 60 are also connected to the microprocessor 20 so that the microprocessor 20 can directly access the sector buffer 16. This access is required to load the data transfer control program from the ROM 32 of the microprocessor 20 into the program storage area 16B of the sector buffer 16 at the time of initialization.

As is well known in the art, the FIFO's 54, 56 and 58 are accessed by the respective read pointers RP and write pointers WP. Each pointer is of a wrap-around type, and returns to zero after a maximum address of the associated FIFO is reached. Unless RP=WP and RP=WP+1, each FIFO can perform a read operation using the RP and a write operation using the WP simultaneously. RP=WP indicates that data to be read is not in the FIFO and, therefore, only a write operation is permitted in that case. RP=WP+1 indicates that the FIFO is full of data not yet read and, therefore, only a read operation is permitted. These conditions are checked by the memory timing control circuit 68.

Increment signals (+1) to the RP and WP are provided by the memory timing control circuit 68 and associated circuits. For simplification, only one increment signal from the memory timing control circuit 68 is shown in FIG. 4, but actually an increment signal is individually provided to each of the RP and WP. The RP and WP are incremented by the individual increment signals from the memory timing control circuit 68 in case of the transfer between the associated FIFO and the sector buffer 16, and are incremented by the increment signals from the respective associated circuit in case of the transfer between each FIFO and the associated circuit. For example, the RP 70 is incremented by the input/output read signal IOR from the register select and interrupt control circuit 40 shown in FIG. 3 when the contents of the host FIFO 54 are read out to the host interface circuit 22, and the WP 72 is incremented by the input/output write signal IOW when data from the host interface circuit 22 is written into the FIFO 54. Similarly, the RP 74 and WP 76 are incremented by a byte signal from the disk interface circuit 26 in case of the transfer between the disk FIFO 56 and the disk interface circuit 26, and the RP 78 and WP 80 are incremented by an increment signal from the sequencer 28 in case of the transfer between the sequencer FIFO 58 and the sequencer 28.

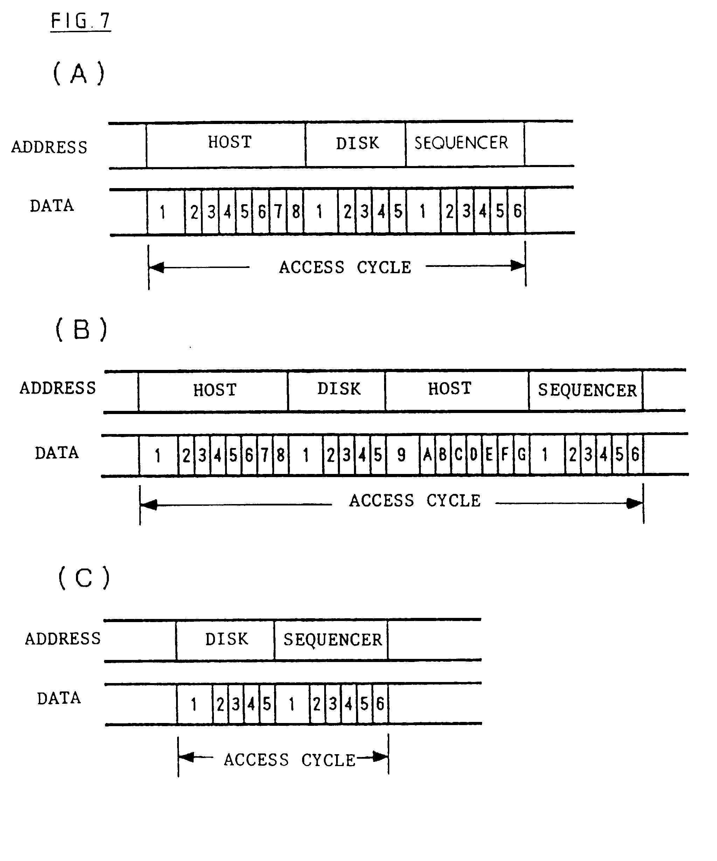

The address counters 62, 64 and 66 are used to address the sector buffer 16. Since the capacity of the sector buffer 16 is 64K words in the embodiment, a 16-bit address is required for its full addressing and, therefore, each address counter is of 16-bit width. The 16-bit address is divided into a row address consisting of higher order 8 bits and a column address consisting of lower order 8 bits, and outputted to the 8-bit address bus 60. A row address select signal RAS and a column address select signal CAS from the memory timing control circuit 68 indicate which address is being transmitted over the address bus 60. Each address counter is enabled and incremented by control signals from the memory timing control circuit 68 when data is transferred between the associated FIFO and the sector buffer 16. At that time, the memory timing control circuit 68 sets a R/W signal high and low for reading from and writing to the sector buffer 16, respectively. Additionally, the memory timing control circuit 68 continuously checks the contents of each RP and WP and determines access timing for the sector buffer 16 based thereon. Next, the access timing for the sector buffer 16 is described with reference to FIG. 7.

FIG. 7 (A) shows standard access in a time sharing mode in which an access cycle of the sector buffer 16 is segmented into a host phase, a disk phase, and a sequencer phase. According to the access cycle, transfer of a maximum of 8 words is first performed between the host FIFO 54 and the sector buffer 16 using the host address counter 62, then transfer of a maximum of 5 words is performed between the disk FIFO 56 and the sector buffer 16 using the disk address counter 64, and finally transfer of a maximum of 6 words is performed between the sequencer FIFO 58 and the sector buffer 16 using the sequencer address counter 66. The memory timing control circuit 68 repeats the cycle until data to be transferred no longer exists. In each phase, an access time for the first word 1 is longer, which occurs due to a page mode access. That is, the first word should be accessed by sequentially supplying a row address and a column address from the associated address counter to the sector buffer 16 while the remaining words can be accessed only by column addresses. Fig. 7 (B) shows a case in which the host 10 has a faster data transfer rate and a host phase for accessing 8 words is inserted every second phase.

If host data has run out in the time sharing mode Fig. 7 (A)/(B), the memory timing control circuit 68 enters a mode shown by (C) and alternately repeats the disk and sequencer phases. Also, if disk data do not exist as, for example, when a sector ID is read out, the memory timing control circuit 68 refreshes the sector buffer 16 in the disk phase in any mode. IBM Technical Disclosure Bulletin, Vol. 33, No. 9, February 1991, pp.193-194 describes a refresh control suitable for such refresh. A static RAM (SRAM), which does not require to be refreshed, may be used for the sector buffer 16, but it is expensive as compared with DRAM. Additionally, if it becomes unable to continue accessing in a certain phase due to the above-mentioned conditions for the RP and WP, the access in the phase is terminated at that time and new access is started in the following phase.

Now, the access of the sector buffer 16 in the time sharing mode is described in more detail in accordance to an example of reading from the hard disk apparatus 14 to the host 10. Since data to be written to the host FIFO from the sector buffer 16 do not exist at first, the memory timing control circuit 68 sets the time sharing mode (C). Data read from the hard disk apparatus 14 is written to the disk FIFO 56 byte by byte by sequentially incrementing the WP 76 under the control of the disk interface circuit 26. When a difference between the RP 74 and the WP 76 exceeds a predetermined value (e.g. 4), the memory timing control circuit 68 starts transfer from the disk FIFO 56 to the sector buffer 16 by enabling the disk address counter 64, setting the R/W signal to the sector buffer 16 low, and sequentially sending the RAS and CAS to the sector buffer 16. Reading from the disk FIFO 56 is performed by incrementing the RP 74 one by one by the increment signal from the memory timing control circuit 68 and by converting consecutive two bytes into one word in the byte/word converter 57. Writing from the disk interface circuit 26 into the disk FIFO 56 and reading from the disk FIFO 56 into the sector buffer 16 may be performed simultaneously as far as the values of the RP 74 and the WP 76 satisfy the above condition.

When five words have been transferred from the disk FIFO 56 to the sector buffer 16, the memory timing control circuit 68 starts transfer from the sector buffer 16 to the sequencer FIFO 58 by changing the access of the sector buffer 16 to the sequencer phase and enabling the sequencer address counter 66. The sequencer address counter 66 is preset to a start address of the program storage area 16B, that is, an address of the first instruction word of the above read control program and the first to sixth instruction words are continuously transferred to the sequencer FIFO 58 in the sequencer phase. The memory timing control circuit 68 performs such transfer by incrementing the sequencer address counter 66 and the WP 80 one by one. When a difference between the RP 78 and the WP 80 exceeds a predetermined value (e.g. 3), the memory timing control circuit 68 starts transfer from the sequencer FIFO 58 to the sequencer 28. The sequencer 28 reads the sequencer FIFO 58 by incrementing the RP 78 one by one. When six words have been transferred from the sector buffer 16 to the sequencer FIFO, the memory timing control circuit 68 changes again to the disk phase.

When a sector of data, that is, 512-byte data has been written to the sector buffer 16 with no error as a result of the access in the time sharing mode (C), the memory timing control circuit 68 changes the time sharing mode from (C) to (A) (or B) upon completion of the sequencer phase so as to transfer the data to the host FIFO 54, and starts the transfer from the sector buffer 16 to the host FIFO 54 by enabling the host address counter 62. When eight words have been transferred from the sector buffer 16 to the host FIFO 54 by incrementing the host address counter 62 and the WP 72 one by one, the memory timing control circuit 68 changes the phase from host to disk. If a difference between the RP 70 and the WP 72 reaches a predetermined value (e.g. 4) during the transfer, the memory timing control circuit 68 directs the host interface circuit 22 to read the host FIFO 54. In response thereto, the host interface circuit 22 transfers the first word to the data register 48, and then interrupts the host 10. The host 10 responds to the interrupt by sending a command to read the data register 48 to the host interface circuit 22. The host interface circuit 22 reads the next word from the host FIFO 54 to the data register 48 by using the input/output read signal IOR simultaneously sent from the host 10 as an increment signal for the RP 70, and interrupts the host 10. Similar operations are repeated thereafter.

As described above, reading from the hard disk apparatus 14 to the host 10 is performed by repeating the access cycles in the time sharing modes (A) or (B) and (C). Writing from the host 10 to the hard disk apparatus 14 is also performed in a similar manner. The sequencer 28 controls such reading and writing by executing the program read from the sector buffer 16 in the sequencer phase (details will be described later).

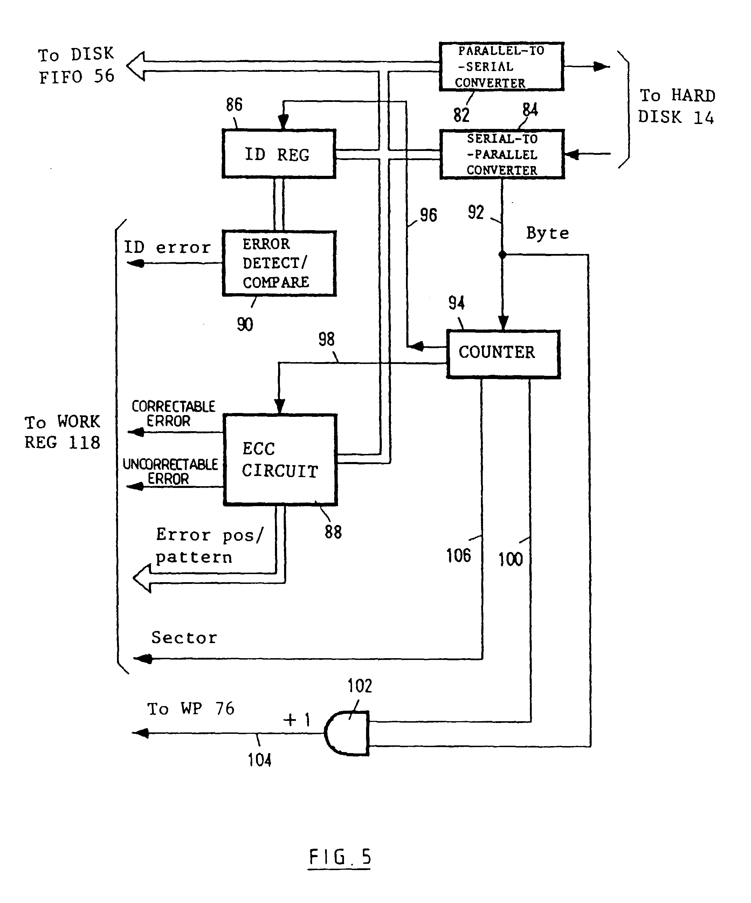

The disk interface circuit 26 shown in FIG. 5 includes a parallel-to-serial converter 82 for converting a byte of parallel data from the disk FIFO 56 to serial data and a serial-to-parallel converter 84 for converting serial data from the hard disk apparatus 14 to a byte of parallel data. The serial data from the parallel-to-serial converter 82 is sent to the hard disk apparatus 14 after being converted to analog signals, and sequentially written into a specified sector location. The parallel data from the serial-to-parallel converter 84 is sent to an ID register 86 if it is a sector ID, or sent to the disk FIFO 56 and an ECC (error correcting logic circuit) circuit 88 if it is ordinary sector data. As is well known in the art, a sector ID is recorded in a leading portion of each sector in the hard disk apparatus 14 and contains an address mark (AM) and a relative block address (RBA). An ID of a sector to be accessed is previously set in the ID register 86 by the microprocessor 20 and an error detect and compare circuit 90 notifies the sequencer 28 of an ID error if the sector ID from the serial-to-parallel converter 84 and the preset sector ID do not coincide with each other or if there is an error in the sector ID from the serial-to-parallel converter 84.

If there is an error in the sector data read from the hard disk apparatus 14, the ECC circuit 88, which is a well-known error correcting logic circuit, outputs either a correctable or uncorrectable error signal depending on whether the error is correctable or not and further outputs signals indicating its error position and error pattern in case of the correctable error. In response to these signals, the sequencer 28 corrects the error. For writing from the host 10, the ECC circuit 88 generates an 11-byte ECC code for each 512-byte sector data sequentially sent from the disk FIFO 56 and sends it to the parallel-to-serial converter 82. Error checking is not performed for data to be written.

The serial-to-parallel converter 84 outputs a byte signal to a line 92 each time when conversion of a byte is completed. A counter 94 counts the byte signal, generates a signal on a line 96 for loading the sector ID into the ID register 86 while that sector ID is being outputted from the serial-to-parallel converter 84 (e.g. the first to seventh bytes), and generates a signal on a line 98 for loading the output of the serial-to-parallel converter 84 into the ECC circuit 88 while the subsequent 523 bytes, that is, 512 data bytes and 11 ECC bytes are being outputted. Further, the counter 94 activates a line 100 to condition an AND gate 102 while the 512 data bytes are being outputted. A second input of the AND gate 102 is connected to the line 92 so that the AND gate 102 passes the byte signal on the line 92 to a line 104 while the sector data of 512 bytes is being read from the hard disk apparatus 14. The byte signal on the line 104 is applied to the WP 76 in FIG. 4 as an increment signal. When the reading of 512 data bytes is completed, the counter 94 generates a sector signal on a line 106 and sends it to the sequencer 28. In response to the sector signal, the sequencer 28 updates a sector count.

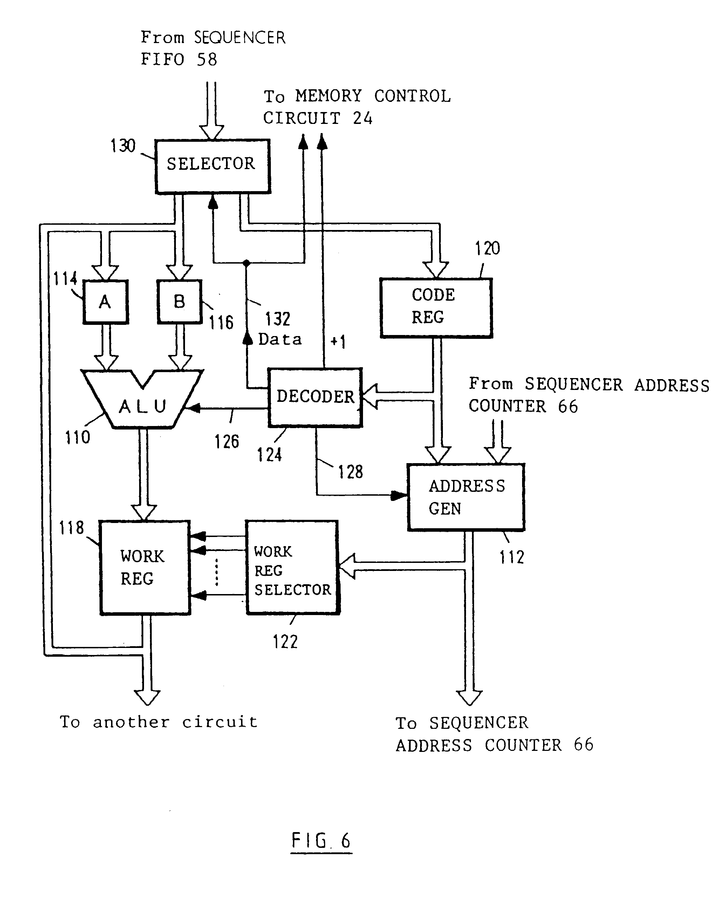

The sequencer 28 shown in FIG. 6 includes an address generator 112 in addition to a conventional arithmetic and logical unit (ALU) 110. Inputs to the ALU are provided from an A register 114 and a B register 116 each of which serves as an accumulator, and its output is provided to work registers 118. Inputs to the address generator 112 are provided from a code register 120 and the sequencer address counter 66 in FIG. 4, and its output is provided to the sequencer address counter 66 and a work register selector 122. The work register selector 122 selects a work register in response to an address from the address generator 112. "Work register" as used herein is a generic term and refers to every register included in the HDC 18. This means that the sequencer 28 may access any register in the HDC 18 and, hence, may control each circuit within the HDC 18.

The A register 114 and the B register 116 receive data from the work registers 118 or the sequencer FIFO 58 shown in FIG. 4, and the code register 120 receives a program instruction from the sequencer FIFO 58. A decoder 124 decodes the program instruction and generates control signals on the lines 126 and 128 that cause the ALU 110 and the address generator 112 to perform specified operations, respectively. In response to the control signal on the line 126, the ALU 110 performs an arithmetic operation such as addition, subtraction or the like, or a logical operation such as AND, OR or the like. In response to the control signal on the line 128, the address generator 112 increments the contents of the sequencer address counter 66 by one and writes back thereto, generates a register address for the work registers 118 or an address for retrieving data from the sector buffer 16, using an address included in the program instruction from the code register 120, or generates a new instruction address by adding the addresses from the code register 120 and the address counter 66.

Usually, the sequencer 28 receives a program instruction from the sector buffer 16 through the sequencer FIFO 58. However, if the program instruction loaded into the code register 120 specifies data reading, a selector 130 is switched by a data read signal generated on a line 132 by the decoder 124 so that the data from the sequencer FIFO 58 is directed to the A register 114 and the B register 116. The data read signal on the line 132 is also sent to the memory control circuit 24 to reset both pointers RP 78 and WP 80 of the sequencer FIFO 58.

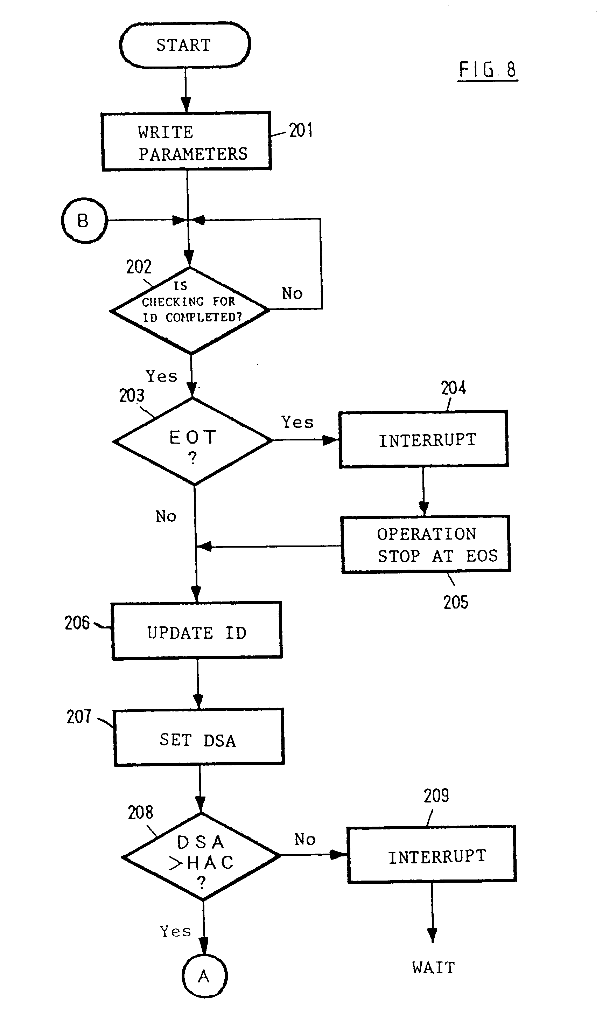

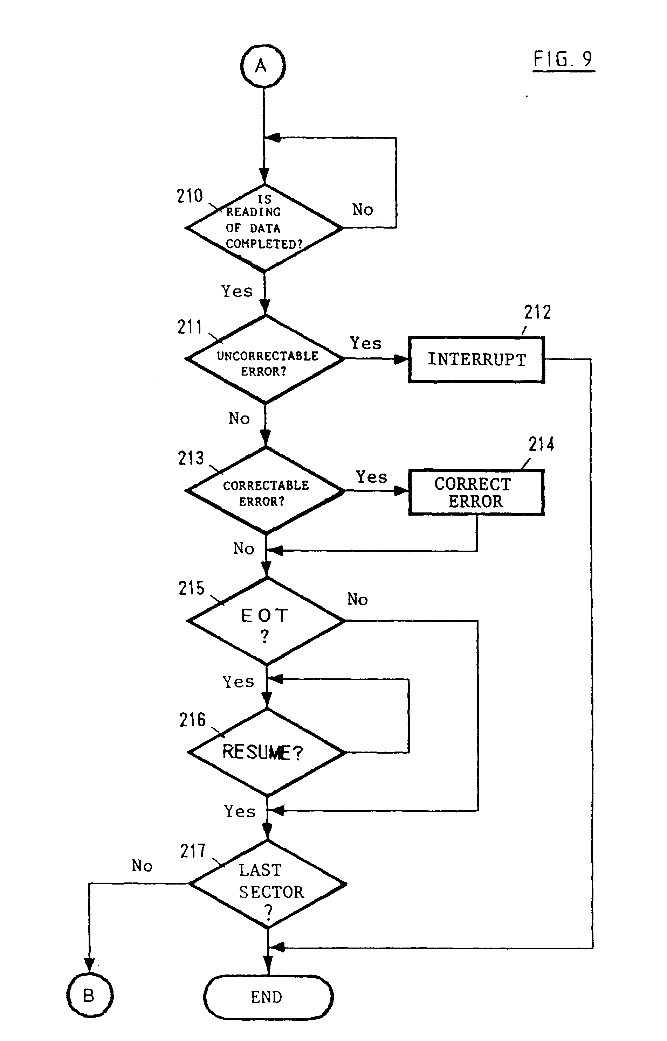

For illustrating a program to be executed by the sequencer 28, a flowchart of the above mentioned read control program is shown in FIG. 8 and FIG. 9. The read control program is read from the sector buffer 16 to the sequencer 28 when a read command is received from the host 10.

The read command and related parameters, i.e. a sector count indicating the number of sectors to be read and an address of a sector from which reading is started, from the host 10 are received by the command register 46, the sector count register 42, and the address register 44 in such a manner as described in the above Application 3-337995. The register select and interrupt control circuit 40 interrupts the microprocessor 20 when receipt thereof is completed. In response to the interrupt from the register select and interrupt control circuit 40, the microprocessor 20 reads and decodes the contents of the command register 46. If decoded is a read command, the microprocessor 20 loads a start address of the read control program into the sequencer address counter 66, sends a start signal to the memory timing control circuit 68 shown in FIG. 4, loads a sector ID corresponding to the start address in the address register 44 of the host interface circuit 22 (FIG. 3) into the ID register 86 of the disk interface circuit 26 (FIG. 5), and causes reading of the hard disk apparatus 14 to be started. The memory timing control circuit 68 resets the host address counter 62, the disk address counter 64, and all of the read pointers RP's 70, 74 and 78 and write pointers WP's 72, 76 and 80 to 0, and starts accessing of the sector buffer 16 in the time sharing mode (C) described above, in response to the start signal from the microprocessor 20.

Since the sector ID is first read from the hard disk apparatus 14, it is the sequencer 28 which first accesses the sector buffer 16 in the time sharing mode C. Therefore, after refreshing the sector buffer 16 instead of the first disk phase, the memory timing control circuit 68 provides an enable signal to the sequencer address counter 66 and sets a R/W signal to the sector buffer 16 high to indicate reading. When enabled by the enable signal, the sequencer address counter 66 outputs its contents, i.e. the start address of the read control program to the address bus 60. The first instruction word is read from the program storage area 16B in the sector buffer 16 and outputted to the data bus 52. This instruction word is written into a location of the sequencer FIFO 58 specified by the WP 80 (initially set to 0). In the sequencer FIFO 58, writing into the FIFO 58 and reading out to the sequencer 28 are simultaneously performed only for the first instruction word. Then the memory timing control circuit 68 increments the sequencer address counter 66 and the WP 80 by one to cause the next instruction word to be transferred from the sector buffer 16 to the sequencer FIFO 58.

In the sequencer 28 shown in FIG. 6, the data signal on the line 132 is low so that the selector 130 passes the first instruction word from the sequencer FIFO 58 to the code register 120. The decoder 124 decodes it to generate necessary control signals and increment the RP 78 by one. Thereafter, the sequencer 28 sequentially executes the read control program shown in FIG. 8 and FIG. 9. Next, the read control program is described step by step.

A first step 201 writes parameters loaded into the sector count register 42 and the address register 44 in the host interface circuit 22 (FIG. 3) to particular locations of the program storage area 16B. The addresses of the registers 42 and 44 and the locations for the parameters to be written are specified by instructions transferred from the program storage area 16B to the code register 120 through the sequencer FIFO 58. The decoder 124 decodes these instructions and first saves the contents of the sequencer address counter 66 in a predetermined location of the sector buffer 16. The register addresses are inputted to the work register selector 122, the addresses of the locations to which the parameters are to be written are loaded into the sequencer address counter 66, and necessary directions are given to the memory timing control circuit 68. Accordingly, the contents of the registers 42 and 44 are written to the sector buffer 16 through the sequencer FIFO 58. After the parameters have been written, the contents saved in the sector buffer 16 are returned to the sequencer address counter 66.

A next step 202 determines whether checking of the sector ID is completed. As described above, the sector ID read from the hard disk apparatus 14 is checked by the error detect and compare circuit 90 in the disk interface circuit 26 (FIG. 5) and its result is written into a particular work register (error register). Accordingly, the sequencer 28 reads out the contents of the error register to determine whether reading of the sector ID is completed with no error. This checking can be easily performed by the ALU 110. After the checking of the sector ID has been completed, the flow goes to a step 203.

The step 203 determines whether the end of track (EOT) is reached, that is, a sector for which checking is completed in the step 202 is the last sector in a track. The sector ID contains an EOT flag, which is set on for the last sector. The sequencer 28 executes the step 203 by checking the contents of the ID register 86 by the ALU 110. If the EOT is reached, the flow goes to a step 204 where the sequencer 28 interrupts the microprocessor 20 and stops the operation at the end of that sector (EOS) (step 205). The operation is actually stopped after reading of the sector data is completed. At that time, the microprocessor causes a head of the hard disk apparatus 14 to be moved to the next track. If the EOT is not reached, the flow goes to a step 206.

The step 206 loads an ID of the next sector into the ID register 86 to prepare for reading of the next sector. This is accomplished by reading the start address included in the parameters written to the sector buffer 16 in the step 201 into the sequencer 28 and updating it by the ALU 110. The sequencer 28 loads the updated address (RBA) into the ID register 86 and writes it back to the sector buffer 16.

A step 207 sets a disk start address (DSA), which is a start base address at the time of writing data of the next sector into the sector buffer 16, to a particular work register. A next step 208 compares the DSA with the contents of the host address counter 62, HAC. (During the execution of the read control program by the sequencer 28, the memory timing control circuit 68 is performing data transfer from the sector buffer 16 to the host FIFO 54 using the host address counter 62.) If DSA=HAC, it means that there is no data to be read from the sector buffer 16 to the host FIFO 54. In that case, the flow goes to a step 209 which interrupts the microprocessor 20 and waits until a sector of data is written to the sector buffer 16 and the DSA is updated.

If DSA is greater than HAC, the flow goes to a step 210 which determines whether the data reading for the current sector is completed. This is accomplished by checking a state of the sector signal outputted to the line 106 from the counter 94 (FIG. 5). If completed, the sector count is updated and then a step 211 checks whether an uncorrectable error has occurred based on the contents of the error register which is one of the work registers 118. If the error has occurred, the flow goes to a step 212 to interrupt the microprocessor 20.

If the uncorrectable error has not occurred, the flow goes to a step 213 which determines whether a correctable error has occurred. This can also be determined from the contents of the error register. If the correctable error has occurred, the flow goes to a step 214 which corrects the error using the error position data and error pattern loaded into the work registers 118 from the ECC circuit 88 shown in FIG. 5. The error position data identifies an erroneous byte. Accordingly, in response to an error correction instruction, the sequencer 28 loads an address of a word containing the error byte into the sequencer address counter 66 and notifies the memory timing control circuit 68 of data reading through the line 132. In response thereto, the memory timing control circuit 68 resets both pointers 78 and 80 of the sequencer FIFO 58 to 0 and performs reading from the sector buffer 16 to the sequencer FIFO 58. The error byte read is loaded from the selector 130 into the B register 116. The ALU 110 corrects the error by performing an exclusive OR operation on the error byte and the corresponding error pattern which has been loaded into the A register 114. The word containing the corrected byte is written back into the original location of the sector buffer 16 through the sequencer FIFO 58.

After the error correction is completed, the flow goes to a step 215 which determines whether the end of track (EOT) is reached. If the EOT is reached, the flow goes to a step 216 and waits until the next track is ready for being read. If the operation can be resumed or the EOT is not reached, the flow goes to a step 217 which determines whether the read sector is the last sector for this read command. This is accomplished by comparing the sector count written into the sector buffer 16 by the step 201 with the sector count updated at the end of the step 210. In case of the last sector, the execution of the read control program is completed, otherwise the flow returns to the step 202.

For a write control program, its basic operations are the same as in the reading except that the direction of data transfer is opposite and the error correction is not done.

## Claims

1. A programmable external storage control apparatus for controlling an external storage (14) in response to a command from a host (10) comprising:
a buffer (16) temporarily storing data to be transferred between said host (10) and said external storage (14) and further storing a program for controlling data transfer between said host (10) and said external storage (14);
control means (18) for controlling said data transfer by reading from said buffer (16) and executing said program; and
a microprocessor (20) starting said control means (18) in reading said program in response to a command from said host (10).

2. The programmable external storage control apparatus according to claim 1, wherein said microprocessor (20) has a memory (32) storing said program and loads said program from the memory (32) into said buffer (16B) at the time of initialization.

3. The programmable external storage control apparatus according to claim 2, wherein said buffer (16) is partitioned into data storage (16A) and program storage (16B) areas and said microprocessor (20) loads said program from said memory (32) into said program storage area (16B) by specifying a start address of said program storage area at the time of said initialization.

4. The programmable external storage control apparatus according to claim 1, 2, or 3, wherein said control means (18) comprises host interface means (22) for exchanging data and commands with said host (10), external storage interface means (26) for exchanging data with said external storage (14), sequencer means (28) for executing said program, and memory control means (24) connecting said host interface means (22), said external storage interface means (26), and said sequencer means (28) to said buffer (16) for controlling transfer between them and said buffer.

5. The programmable external storage control apparatus according to claim 4, wherein said microprocessor (20) starts said memory control means (18) in response to a command from said host (10) and starts transfer between said buffer (16) and said host interface means (22), said external storage interface means (26), and said sequencer means (28) in a time sharing mode.

6. The programmable external storage control apparatus according to claim 5, wherein said memory control means (24) performs the transfer between said buffer (16) and said host interface means (22) said external storage interface means (26), and said sequencer means (28) through the respective first-in first-out buffers (54, 56, 58).

7. The programmable external storage control apparatus according to claim 4, 5, or 6, wherein said sequencer means (28) comprises a decoder (124) for decoding program instructions read from said buffer (16), arithmetic means and address generating means (112) controlled by signals from said decoder (124), and register selecting means (122) for selecting a register in said control means based on an address from said address generating means (112).

8. An external storage system in which data is read or written by a command from a host (10) comprising:
an external storage (14) storing said data;
a buffer (16) temporarily storing data to be transferred between said host (10) and said external storage (14) and further storing a program for controlling data transfer between said host (10) and said external storage (14);
control means (18) for controlling said data transfer by reading from said buffer (16) and executing said program; and
a microprocessor (20) for starting said control means (18) in reading said program in response to a command from said host (10).

9. The external storage system according to claim 8, wherein said microprocessor (20) has a memory (32) storing said program and loads said program from the memory into said buffer (16) at the time of initialization.

10. The external storage system according to claim 9, wherein said buffer (16) is partitioned into data storage (16A) and program storage (16B) areas and said microprocessor (20) loads said program from said memory (32) into said program storage area (16B) by specifying a start address of said program storage area at the time of said initialization.

11. The external storage system according to claim 8, 9, or 10, wherein said control means (18) comprises host interface means (22) for exchanging data and commands with said host (10), external storage interface means (26) for exchanging data with said external storage (14), sequencer means (28) for executing said program, and memory control means (24) connecting said host interface means (22), said external storage interface means (26), and said sequencer means (28) to said buffer (16) for controlling transfer between them and said buffer.

12. The external storage system according to claim 11, wherein said microprocessor (20) starts said memory control means (24) in response to a command from said host (10) and starts transfer between said buffer (16) and said host interface means (22), said external storage interface means (26), and said sequencer means (28) in a time sharing mode.

13. The external storage system according to claim 12, wherein said memory control means (24) performs the transfer between said buffer (16) and said host interface means (22), said external storage interface means (26), and said sequencer means (28) through the respective first-in first-out buffers (54, 56, 58).

14. The external storage system according to claim 11, 12, or 13, wherein said sequencer means (28) comprises a decoder (124) for decoding program instructions read from said buffer (16), arithmetic means and address generating means controlled by signals from said decoder (124), and register selecting means (122) for selecting a register in said control means based on an address from said address generating means (112).

## Patentansprüche

1. Programmierbare Steuerungseinrichtung für einen externen Speicher zum Steuern eines externen Speichers (14) in Abhängigkeit eines Befehls von einem Host (10), die umfasst:
einen Puffer (16), der zwischen dem Host (10) und dem externen Speicher (14) zu übertragende Daten vorübergehend speichert und darüber hinaus ein Programm zur Steuerung der Datenübertragung zwischen dem Host (10) und dem externen Speicher (14) speichert;
ein Steuerungsmittel (18) zur Steuerung der Datenübertragung, indem das Programm aus dem Puffer (16) gelesen und ausgeführt wird; und
einen Mikroprozessor (20), der das Steuerungsmittel (18) startet, indem er das Programm in Antwort auf einen Befehl vom Host (10) liest.

2. Programmierbare Steuerungseinrichtung für einen externen Speicher nach Anspruch 1, wobei der Mikroprozessor (20) einen Speicher (32), der das Programm speichert, aufweist und das Programm bei der Initialisierung aus dem Speicher (32) in den Puffer (16B) lädt.

3. Programmierbare Steuerungseinrichtung für einen externen Speicher nach Anspruch 2, wobei der Puffer (16) in einen Datenspeicher- (16A) und einen Programmspeicherbereich (16B) aufgeteilt ist und der Mikroprozessor (20) das Programm aus dem Speicher (32) in den Programmspeicherbereich (16B) lädt, indem er bei der Initialisierung eine Startadresse des Programmspeicherbereichs angibt.

4. Programmierbare Steuerungseinrichtung für einen externen Speicher nach Anspruch 1, 2 oder 3, wobei das Steuerungsmittel (18) ein Schnittstellenmittel (22) zum Host umfasst, um Daten und Befehle mit dem Host (10) auszutauschen, ein Schnittstellenmittel (26) zum externen Speicher, um Daten mit dem externen Speicher (14) auszutauschen, ein Ablaufsteuerungsmittel (28), um das Programm auszuführen, und ein Speichersteuerungsmittel (24), welches das Schnittstellenmittel (22) zum Host, das Schnittstellenmittel (26) zum externen Speicher und das Ablaufsteuerungsmittel (28) mit dem Puffer (16) verbindet, um die Übertragung zwischen diesen und dem Puffer zu steuern.

5. Programmierbare Steuerungseinrichtung für einen externen Speicher nach Anspruch 4, wobei der Mikroprozessor (20) das Speichersteuerungsmittel (18) in Antwort auf einen Befehl vom Host (10) startet und die Übertragung zwischen dem Puffer (16) und dem Schnittstellenmittel (22) zum Host, dem Schnittstellenmittel (26) zum externen Speicher und dem Ablaufsteuerungsmittel (28) in einem zeitverschachtelten Modus beginnt.

6. Programmierbare Steuerungseinrichtung für einen externen Speicher nach Anspruch 5, wobei das Speichersteuerungsmittel (24) die Übertragung zwischen dem Puffer (16) und dem Schnittstellenmittel (22) zum Host, dem Schnittstellenmittel (26) zum externen Speicher und dem Ablaufsteuerungsmittel (28) über die jeweilige First-in-First-out-Puffer (54, 56, 58) ausführt.

7. Programmierbare Steuerungseinrichtung für einen externen Speicher nach Anspruch 4, 5 oder 6, wobei das Ablaufsteuerungsmittel (28) einen Decoder (124) umfasst, um vom Puffer (16) ausgelesene Programmanweisungen zu decodieren, ein Arithmetikmittel und ein Adresserzeugungsmittel (112), die durch Signale vom Decoder (124) gesteuert werden, und ein Registerauswahlmittel (122), um ein Register im Steuerungsmittel basierend auf einer Adresse vom Adresserzeugungsmittel (112) auszuwählen.

8. Externes Speichersystem, in welchem durch einen Befehl von einem Host (10) Daten gelesen oder geschrieben werden, das umfasst:
einen externen Speicher (14), der die Daten speichert;
einen Puffer (16), der zwischen dem Host (10) und dem externen Speicher (14) zu übertragende Daten vorübergehend speichert und darüber hinaus ein Programm zur Steuerung der Datenübertragung zwischen dem Host (10) und dem externen Speicher (14) speichert;
ein Steuerungsmittel (18) zur Steuerung der Datenübertragung, indem das Programm aus dem Puffer (16) gelesen und ausgeführt wird; und
einen Mikroprozessor (20), um das Steuerungsmittel (18) zu starten, indem er das Programm in Antwort auf einen Befehl vom Host (10) liest.

9. Externes Speichersystem nach Anspruch 8, wobei der Mikroprozessor (20) einen Speicher (32), der das Programm speichert, aufweist und bei der Initialisierung das Programm aus dem Speicher in den Puffer (16B) lädt.

10. Externes Speichersystem nach Anspruch 9, wobei der Puffer (16) in einen Datenspeicher- (16A) und einen Programmspeicherbereich (16B) aufgeteilt ist und der Mikroprozessor (20) das Programm aus dem Speicher (32) in den Programmspeicherbereich (16B) lädt, indem er bei der Initialisierung eine Startadresse des Programmspeicherbereichs angibt.

11. Externes Speichersystem nach Anspruch 8, 9 oder 10, wobei das Steuerungsmittel (18) ein Schnittstellenmittel (22) zum Host umfasst, um Daten und Befehle mit dem Host (10) auszutauschen, ein Schnittstellenmittel (26) zum externen Speicher, um Daten mit dem externen Speicher (14) auszutauschen, ein Ablaufsteuerungsmittel (28), um das Programm auszuführen, und ein Speichersteuerungsmittel (24), welches das Schnittstellenmittel (22) zum Host, das Schnittstellenmittel (26) zum externen Speicher und das Ablaufsteuerungsmittel (28) mit dem Puffer (16) verbindet, um die Übertragung zwischen diesen und dem Puffer zu steuern.

12. Externes Speichersystem nach Anspruch 11, wobei der Mikroprozessor (20) das Speichersteuerungsmittel (24) in Antwort auf einen Befehl vom Host (10) startet und die Übertragung zwischen dem Puffer (16) und dem Schnittstellenmittel (22) zum Host, dem Schnittstellenmittel (26) zum externen Speicher und dem Ablaufsteuerungsmittel (28) in einem zeitverschachtelten Modus beginnt.

13. Externes Speichersystem nach Anspruch 12, wobei das Speichersteuerungsmittel (24) die Übertragung zwischen dem Puffer (16) und dem Schnittstellenmittel (22) zum Host, dem Schnittstellenmittel (26) zum externen Speicher und dem Ablaufsteuerungsmittel (28) über die jeweiligen First-in-First-out-Puffer (54, 56, 58) ausführt.

14. Externes Speichersystem nach Anspruch 11, 12 oder 13, wobei das Ablaufsteuerungsmittel (28) einen Decoder (124) umfasst, um vom Puffer (16) ausgelesene Programmanweisungen zu decodieren, ein Arithmetikmittel und ein Adresserzeugungsmittel, die durch Signale vom Decoder (124) gesteuert werden, und ein Registerauswahlmittel (122), um ein Register im Steuerungsmittel basierend auf einer Adresse vom Adresserzeugungsmittel (112) auszuwählen.

## Revendications

1. Dispositif de commande de mémorisation externe programmable pour commander une mémoire externe (14) en réponse à un ordre provenant d'un ordinateur central (10) comprenant :
une mémoire tampon (16) mémorisant temporairement les données qui doivent être transférées entre ledit ordinateur central (10) et ladite mémoire externe (14) et mémorisant en outre un programme pour commander le transfert de données entre ledit ordinateur central (10) et ladite mémoire externe (14) ;
un moyen de commande (18) pour commander ledit transfert de données en extrayant par lecture à partir de ladite mémoire tampon (16) et en exécutant ledit programme ; et
un microprocesseur (20) lançant ledit moyen de commande (18) en lisant ledit programme en réponse à un ordre provenant dudit ordinateur central (10).

2. Dispositif de commande de mémorisation externe programmable selon la revendication 1, dans lequel ledit processeur (20) comprend une mémoire (32) mémorisant ledit programme et charge ledit programme de la mémoire (32) dans ladite mémoire tampon (16B) au moment de l'initialisation.

3. Dispositif de commande de mémorisation externe programmable selon la revendication 2, dans lequel ladite mémoire tampon (16) est séparée en zones de mémoire de données (16A) et de mémoire de programme (16B) et ledit microprocesseur (20) charge ledit programme à partir de ladite mémoire (32) dans ladite zone de mémorisation de programme (16B) en spécifiant une adresse de début de ladite zone de mémorisation de programme au moment de ladite initialisation.

4. Dispositif de commande de mémorisation externe programmable selon la revendication 1, 2 ou 3, dans lequel ledit moyen de commande (18) comprend un moyen d'interface d'ordinateur central (22) pour échanger des données et des ordres avec ledit ordinateur central (10), un moyen d'interface de mémoire externe (26) pour échanger les données avec ladite mémoire externe (14), un moyen de séquenceur (28) pour exécuter ledit programme, et un moyen de commande de mémoire (24) connectant ledit moyen d'interface d'ordinateur central (22), ledit moyen d'interface de mémoire externe (26) et ledit moyen de séquenceur (28) à ladite mémoire tampon (16) pour commander le transfert entre ceux-ci et ladite mémoire tampon.

5. Dispositif de commande de mémorisation externe programmable selon la revendication 4, dans lequel ledit microprocesseur (20) lance ledit moyen de commande de mémoire (18) en réponse à un ordre provenant dudit ordinateur central (10) et commence le transfert entre ladite mémoire tampon (16) et ledit moyen d'interface d'ordinateur central (22), ledit moyen d'interface de mémoire externe (26) et ledit moyen de séquenceur (28) en mode de partage de temps.

6. Dispositif de commande de mémorisation externe programmable selon la revendication 5, dans lequel ledit moyen de commande de mémoire (24) effectue le transfert entre ladite mémoire tampon (16) et ledit moyen d'interface d'ordinateur central (22), ledit moyen d'interface de mémoire externe (26) et ledit moyen de séquenceur (28) par l'intermédiaire de mémoires tampon premier entré premier sorti respectives (54, 56, 58).

7. Dispositif de commande de mémorisation externe programmable selon la revendication 4, 5 ou 6, dans lequel ledit moyen de séquenceur (28) comprend un décodeur (124) pour décoder les instructions de programme lues à partir de ladite mémoire tampon (16), un moyen arithmétique et un moyen de génération d'adresse (112) commandés par les signaux provenant du décodeur (124) et un moyen de sélection de registre (122) pour sélectionner un registre dans ledit moyen de commande sur la base d'une adresse provenant dudit moyen de génération d'adresse (112).

8. Système de mémoire externe dans lequel les données sont lues ou écrites par un ordre provenant d'un ordinateur central (10) comprenant :
une mémoire externe (14) mémorisant lesdites données ;
une mémoire tampon (16) mémorisant temporairement les données qui doivent être transférées entre ledit ordinateur central (10) et ladite mémoire externe (14) et mémorisant en outre un programme pour commander le transfert des données entre ledit ordinateur central (10) et ladite mémoire externe (14) ;
un moyen de commande (18) pour commander ledit transfert de données en lisant dans ladite mémoire tampon (16) et en exécutant ledit programme ; et
un microprocesseur (20) pour lancer ledit moyen de commande (18) en lecture dudit programme en réponse à un ordre provenant dudit ordinateur central (10).

9. Système de mémoire externe selon la revendication 8, dans lequel ledit microprocesseur (20) comporte une mémoire (32) mémorisant ledit programme et charge ledit programme provenant de la mémoire dans ladite mémoire tampon (16) au moment de l'initialisation.

10. Système de mémoire externe selon la revendication 9, dans lequel ladite mémoire tampon (16) est séparée en zones de mémorisation de données (16A) et de mémorisation de programme (16B) et ledit microprocesseur (20) charge ledit programme provenant de ladite mémoire (32) dans ladite zone de mémorisation de programme (16B) en spécifiant l'adresse de début de ladite zone de mémorisation de programme au moment de ladite initialisation.

11. Système de mémoire externe selon la revendication 8, 9 ou 10, dans lequel ledit moyen de commande (18) un moyen d'interface d'ordinateur central (22) pour échanger des données et des ordres avec ledit ordinateur central (10), un moyen d'interface de mémoire externe (26) pour échanger des données avec ladite mémoire externe (14), un moyen de séquenceur (28) pour exécuter ledit programme et un moyen de commande de mémoire (24) connectant ledit moyen d'interface d'ordinateur central (22), ledit moyen d'interface de mémoire externe (26) et ledit moyen de séquenceur (28) à ladite mémoire tampon (16) pour commander le transfert entre ceux-ci et ladite mémoire tampon.

12. Système de mémoire externe selon la revendication 11, dans lequel ledit microprocesseur (20) lance ledit moyen de commande de mémoire (24) en réponse à un ordre provenant dudit ordinateur central (10) et commence le transfert entre ladite mémoire tampon (16) et ledit moyen d'interface d'ordinateur central (22), ledit moyen d'interface de mémoire externe (26) et ledit moyen de séquenceur (28) en mode à partage de temps.

13. Système de mémoire externe selon la revendication 12, dans lequel ledit moyen de commande de mémoire (24) effectue le transfert entre ladite mémoire tampon (16) et ledit moyen d'interface d'ordinateur central (22), ledit moyen d'interface de mémoire externe (26) et ledit moyen de séquenceur (28) par l'intermédiaire de mémoires tampon premier entré premier sorti respectives (54, 56, 58).

14. Système de mémoire externe selon la revendication 11, 12 ou 13, dans lequel ledit moyen de séquenceur (28) comprend un décodeur (124) pour décoder les instructions de programme lues à partir de ladite mémoire tampon (16), un moyen arithmétique et un moyen de génération d'adresse commandés par les signaux provenant dudit décodeur (124), et un moyen de sélection de registre (122) pour sélectionner un registre dans ledit moyen de commande sur la base d'une adresse provenant dudit moyen de génération d'adresse (112).
